Europäisches Patentamt

(19) European Patent Office

Office européen des brevets

(11) Numéro de publication: **0 004 908**
**B2**

(12) # NOUVEAU FASCICULE DE BREVET EUROPEEN

(45) Date de publication du nouveau fascicule du brevet:
**27.12.85**

(21) Numéro de dépôt: **79101026.7**

(22) Date de dépôt: **04.04.79**

(51) Int. Cl.⁴: **A 47 J  43/046,** A 47 J  42/56

(54) **Appareil électroménager de traitement des aliments avec interrupteur de sécurité.**

(30) Priorité: **14.04.78  FR 7811055**

(43) Date de publication de la demande:
**31.10.79 Bulletin 79/22**

(45) Mention de la délivrance du brevet:
**15.10.80 Bulletin 80/21**

(45) Mention de la décision concernant l'opposition:
**27.12.85 Bulletin 85/52**

(84) Etats contractants désignés:
**BE CH DE IT NL SE**

(56) Documents cités:
**DE - A - 2 518 732**
**DE - B - 1 086 022**
**DE - B - 1 165 215**
**DE - B - 1 165 497**
**DE - U - 1 909 311**
**FR - A - 1 233 425**
**FR - A - 2 128 494**
**FR - A - 2 140 891**
**FR - A - 2 388 505**

(73) Titulaire: **MOULINEX S.A., 7 à 15, rue Jules-Ferry,
F-93171 Bagnolet (FR)**

(72) Inventeur: **Amiot, Jacques Henri Julien, 35, avenue de
Courteille, F-61000 Alencon (FR)**

(74) Mandataire: **May, Hans Ulrich, Dr., Thierschstrasse 27,
D-8000 München 22 (DE)**

EP 0 004 908 B2

## Description

L'invention se rapporte aux appareils électroménagers de traitement des aliments, qui comportent: un socle supportant un bol de travail fermé par un couvercle amovible qui est fixé audit socle par un dispositif de fixation par rotation, par exemple du genre baïonette; un groupe moteur qui est agencé dans ledit socle et dont l'arbre de sortie porte un outil de travail interne audit bol; et un interrupteur de commande dudit groupe moteur.

L'invention concerne, plus précisément, les appareils de ce genre dans lesquels l'interrupteur comporte une touche de manœuvre située à l'interieur d'un logement pratiqué dans une face du socle, et qui comprennent un poussoir d'actionnement de cette touche monté mobile sur le couvecle pour occuper ainsi au moins trois positions: une position de retrait pour laquelle ce poussoir est hors dudit logement de la touche et qu'il occupe automatiquement avant le premier actionnement du moteur après chaque fixation du couvucle; une position d'armement pour laquelle il est engagé dans l'entrée dudit logement, empêchant ainsi la rotation du couvercle, sans toutefois provoquer l'alimentation électrique du groupe moteur; et une position d'extension pour laquelle, pénétrant plus profondément dans ledit logement, il actionne la touche pour provoquer l'alimentation du groupe moteur.

Dans les appareils connus de ce genre, lorsque l'usager, après une opération de traitement d'aliments, fait passer le poussoir de sa position d'extension à sa position de retrait et enlève alors le couvercle, il peut arriver que l'outil de travail, par exemple un couperet rotatif, continue à tourner par effet d'inertie alors que le couvercle est déjà enlevé. Il s'ensuit un risque de blessure aux mains de l'usager. Un tel appareil est décrit, par exemple, dans FR-A-1 233 425.

L'invention a pour but d'éliminer ce risque.

A cet effet, l'invention prévoit d'équiper en outre l'appareil d'un verrou de sécurité monté mobile par rapport au poussoir entre une position de verrouillage, en laquelle ce verrou est rappelé automatiquement par des movens élastiques dès que le poussoir est en sa position d'armement et pour laquelle il empêche ce poussoir de retourner à sa position de retrait, et une position de déverrouillage, en laquelle ce verrou peut être amené à l'encontre desdits moyens élastiques, et pour laquelle il autorise le poussoir à retourner vers sa position de retrait.

Ainsi, dès le début de toute operation de traitement d'aliments, c'est-à-dire dès que l'usager amène le poussoir de sa position de retrait à sa position d'extension en passant par la position d'armement, le verrou vient automatiquement en sa position de verrouillage, interdisant le retour direct du poussoir en sa position de retrait, c'est-à-dire empêchant alors la rotation du couvercle sur le socle et donc l'enlèvement de ce couvercle. Pour enlever ce couvercle, l'usager doit exercer sur le verrou une action propre à l'amener en position de déverrouillage, dégageant le poussoir du logement dans lequel ce verrou de maintenait, et permettant donc la rotation du couvercle.

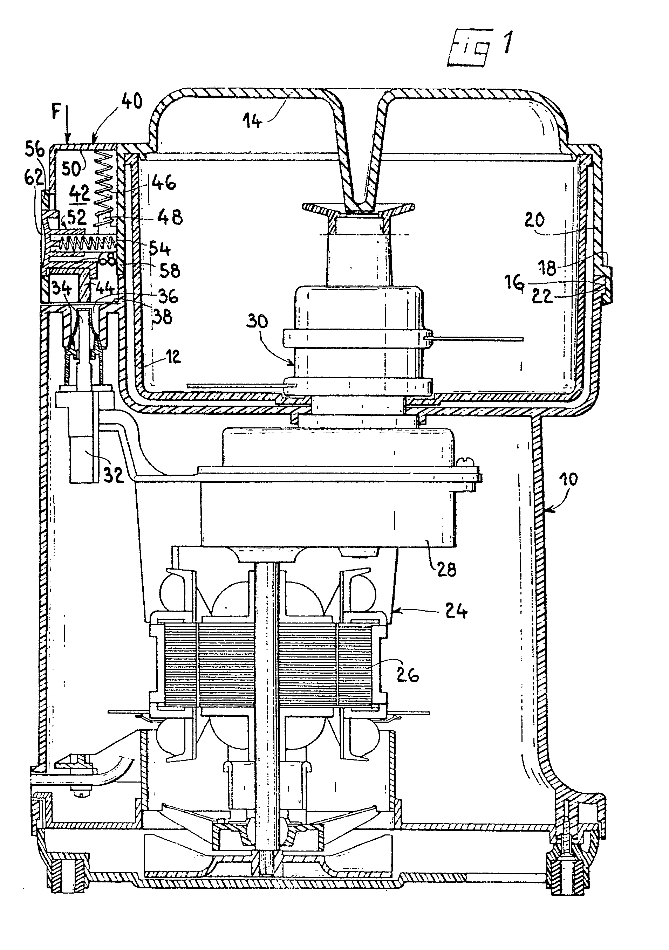

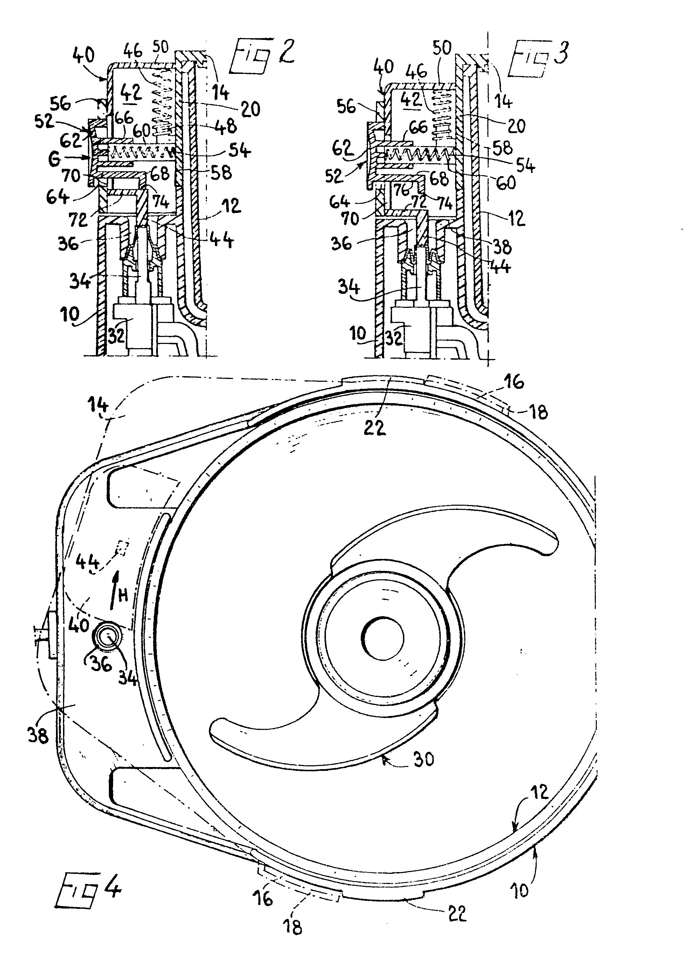

Les caractéristiques et avantages de l'invention ressortiront d'ailleurs de la description qui va suivre, à titre d'exemple, en référence aux dessins annexés dans lesquels: la figure 1 est une coupe verticale d'un appareil de traitement des aliments, par exemple un hachoir, réalisé selon l'invention, avec le poussoir de commande placé en sa position de retrait et le verrou de sécurité en sa position de déverrouillage; la figure 2 représente, également en coupe verticale, le poussoir de commande en sa position d'armement et le verrou de sécurité en sa position verrouillage; la figure 3 est une vue analogue à la figure 2, mais avec le poussoir en sa position d'extension; la figure 4 représente en traits pleins une vue en plan de l'appareil sans son couvercle, et en traits interrompus le contour du couvercle en une position qu'il occupe au cours de son enlèvement de l'appareil.

Le hachoir représenté à la figure 1 comporte un socle 10 supportant un bol de travail 12 fermé par un couvercle amovible 14 qui est fixé au socle par un dispositif à baïonnette comprenant plusieurs raineurs horizontales 16 qui sont pratiquées chacune dans la face interne d'un bossage 18 porté par une jupe périphérique 20 du couvercle, et qui s'engagent chacune sur une nervure horizontale complémentaire 22 portée par la périphérie du socle 10. Dans le socle 10 est agencé un groupe moteur 24 comprenant un moteur électrique 26 suivi d'un réducteur de vitesse 28 dont l'arbre de sortie porte un couperet de travail 30 interne au bol 12.

Le moteur 26 est commandé par un interrupteur électrique 32 dont la touche de manœuvre 34 est située à l'intérieur d'un logement 36 pratiqué dans une face horizontale 38 du socle 10. Cette touche est rappelée élastiquement vers le haut et est actionnée par un poussoir 40 qui est monté coulissant verticalement dans un passage 42 traversant de haut en bas le couvercle 14 et ménagé dans un prolongement latéral de la jupe périphérique 20. L'extrémité inférieure de ce poussoir présente la forme d'un doigt 44 propre à venir en prise avec la touche 34. Ce poussoir est rappelé vers le haut dans le passage 42 par un ressort 46 interposé entre un ergot fixe 48 porté par la jupe 20 et le sommet 50 du poussoir. Ce poussoir peut ainsi occuper au moins trois positions: une position haute de retrait (fig. 1) pour laquelle son doigt 44 est hors du logement 36 de la touche; une position intermédiaire ou d'armement (fig. 2) pour laquelle son doigt 44 est engagé dans l'entrée du logement 36 et est en prise avec la touche 34 sans toutefois provoquer l'alimentation du moteur, tandis qu'en même temps, par butée du doigt 44 sur le bord du logement 36, il empêche la rotation du couvercle 14 sur le socle 10; et une position abaissée ou d'extension (fig. 3) pour laquelle le doigt 44, pénétrant plus profondément dans le logement 36, actionne la touche 34 pour provoquer l'alimentation du moteur 26.

Selon la présente invention, l'appareil est équipé d'un verrou de sécurité 52 monté mobile entre une position de verrouillage (fig. 2 et 3), en laquelle ce verrou est rappelé automatiquement par un ressort 54 dès que le poussoir 40 est en sa position d'armement de la figure 2, et pour laquelle il empêche ce poussoir de retourner à sa position de retrait de la figure 1, et une position de déverrouillage (fig. 1), en laquelle ce verrou peut être amené à l'encontre du ressort 54, et pour laquelle il autorise le poussoir à retourner vers sa position de retrait.

Comme on le voit sur les figures 1 à 3, le verrou 52 est disposé transversalement dans le passage 42 de déplacement vertical du poussoir 40, entre deux parois opposées 56 et 58 de ce passage, et il est monté coulissant horizontalement sur deux guides espacés 60 (dont un seul est visible sur les figures 1 à 3) solidaires de la paroi 58. Le ressort 54 est situé entre ces guides 60; il est, par ailleurs, interposé entre la paroi 58 et un siège approprié ménagé sur le verrou 52. Ce verrou comprend une partie libre 62, formant bouton de commande, qui travers une ouverture 64 pratiquée dans la paroi 56 et débouchant à l'extérieur latéralement au couvercle 14, une partie postérieure 66 sur laquelle est formé le siège du ressort 54, et une partie active inférieure 68. Les parties 66 et 68 traversent avec jeu vertical une lumière 70 pratiquée dans le poussoir 40.

Le poussoir 40 présente un épaulement horizontal 72 qui est formé sur le bord inférieur de la lumière 70 et avec lequel peut venir en prise une portée horizontale 74 ménagée sur la partie active 68 du verrou et définissant la position d'armement du poussoir (fig. 2). Cette partie active 68 présente en outre une seconde portée horizontale 76 qui peut venir en prise avec l'épaulement 72 du poussoir et qui est décalée verticalement de la première portée 74 vers le haut et également horizontalement de celle-ci vers l'extérieur, cette seconde portée définissant la position de retrait du poussoir (fig. 1).

Dans un but de sécurité, le moteur 26 est équipé d'un dispositif de freinage électrique commandé également par la touche de manœuvre 34 et donc par le poussoir 40. Ce dispositif de freinage (non visible sur les dessins) est du type à court-circuit de l'induit du moteur. Il est commandé par des déplacements de contacts électriques internes à l'interrupteur 32 et manœuvrés par la touche 34 de manière telle que la mise en service de ce dispositif de freinage s'effectue lors du retour du poussoir de sa position d'armement (fig. 2) à sa position de retrait (fig. 1), tandis que, pour sa position d'armement (fig. 2), le poussoir maintient la touche 34 en une position d'abaissement intermédiaire pour laquelle le dispositif de freinage est mis hors de service.

Au début de l'opération de traitement des aliments, le couvercle 14 est placé sur l'appareil en la position illustrée à la figure 1. Pour obtenir la mise en marche de l'appareil, l'usager amène le poussoir 40 (flèche F) de sa position de retrait (fig. 1) à sa position d'extension (fig. 3) en passant par la position d'armement (fig. 2). Lors du passage en cette position d'armement, c'est-à-dire lorsque l'épaulement 72 vient au-dessus du niveau de la portée 74, le verrou 52 échappe à la butée formée par l'arête postérieure de cet épaulement et, poussé vers l'extérieur par le ressort 54, vient automatiquement en sa position de verrouillage (fig. 2 et 3) pour laquelle la portée 74 vient se situer au-dessus de l'épaulement 72. Une fois ce verrouillage effectué, si l'usager relâche le poussoir 40 dans le but d'arrêter l'appareil, ce poussoir ne peut plus retourner de luimême à sa position haute de retrait, c'est-à-dire que le doigt 44 du poussoir reste engagé partiellement dans l'entrée du logement 36 de la touche de l'interrupteur (fig. 2), empêchant alors la rotation du couvercle 14 par rapport au socle et donc l'enlèvement de ce couvercle, et maintenant hors service le dispositif de freinage. Si alors, bien que le moteur ne soit plus alimenté, le couperet 30 continue à tourner dans le bol 12, il n'existe aucun danger de blessure pour l'usager puis-que ce couperet demeure protégé par le couvercle.

Pour enlever le couvercle, l'usager doit exercer sur le verrou 52 une pression latérale selon la flèche G (fig. 2) à l'encontre du ressort 54, de manière à amener ce verrou en position de déverrouillage, c'est-à-dire à effacer vers l'intérieur la portée 74, laissant le poussoir 40 remonter sous l'effet du ressort 46 jusqu'à ce que l'épaulement 72 vienne buter contre la seconde portée 76 du verrou, ce qui définit la position de retrait du poussoir (fig. 1). Simultanément à cette remontée du poussoir, la touche 34 est passée de la position de la figure 2 à celle de la figure 1, mettant alors en service le dispositif de freinage. Le couperet 30 s'arrête immédiatement. A ce moment le doigt 44 du poussoir est complétement dégagé du logement 36, ce qui permet à l'usager de faire tourner le couvercle 14 par rapport au socle (flèche H de la figure 4), jusqu'à dégager les rainures 16 des nervures 22 du dispositif de fixation à baïonnette.

On comprendra les qualités de sécurité du hachoir: non seulement l'usager ne peut enlever le couvercle sans avoir au préalable actionné le verrou latéral 52, mais encore l'arrêt du couperet est assuré automatiquement dès la manœuvre de ce verrou.

**Revendications**

1. Appareil électroménager de traitement des aliments, comportant un socle (10) supportant un bol de travail fermé par un couvercle amovible (14) qui est fixé audit socle par un dispositif de fixation par rotation, par exemple du genre baïonnette, un groupe moteur (24) qui est agencé dans ledit socle et dont l'arbre de sortie porte un outil de travail (30) interne audit bol, un interrupteur (32) qui commande ledit groupe moteur et dont la touche de manœuvre (34) est située à l'intérieur d'un logement pratiqué dans une face du socle, et un poussoir d'actionnement (40) de ladite touche qui est monté mobile sur le couvercle pour occuper ainsi au moins trois positions, soit une position de retrait pour laquelle il est hors dudit logement de la touche et qu'il occupe automatiquement avant le premier actionnement du moteur après chaque fixation du couvucle, une position d'armement pour laquelle il est engagé dans l'entrée dudit logement, empêchant ainsi la rotation du couvercle, sans toutefois provoquer l'alimentation du groupe moteur, et une position d'extension pour laquelle, pénétrant plus profondément dans ledit logement, il actionne la touche pour provoquer l'alimentation du groupe moteur, caractérisé en ce qu'il est équipe en outre d'un verrou de sécurité (52) monté mobile par rapport au poussoir entre une position de verrouillage (fig. 2), en laquelle ce verrou est rappelé automatiquement par des moyens élastiques (54) dès que le poussoir (40) est en sa position d'armement (fig. 2), et pour laquelle il empêche ce poussoir de retourner à sa position de retrait, et une position de déverrouillage (fig. 1), en laquelle ce verrou peut être amené à l'encontre desdits moyens élastiques, et pour laquelle il autorise le poussoir à retourner vers sa position de retrait (fig. 1).

2. Appareil électroménager selon la revendication 1, caractérisé en ce que le verrou est monté coulissant sur des moyens de guidage (60) ménagés dans le couvercle (14).

3. Appareil électroménager selon la revendication 2, caractérisé en ce que, le logement (36) de la touche (34) étant pratiqué dans une face horizontale (38) du socle (10) et le poussoir (40) étant monté coulissant verticalement dans un passage (42) traversant le couvercle (14) au voisinage de sa périphérie, le verrou (52) est monté coulissant horizontalement.

4. Appareil électroménager selon la revendication 3, caractérisé en ce que le verrou (52) est disposé transversalement dans le passage (42) de coulissement du poussoir (40) entre deux parois opposées (56 et 58) de ce passage, et comprend une partie active (68) traversant avec jeu une lumière (70) pratiquée dans le poussoir (40) et une partie libre (62) traversant une ouverture (64) qui est pratiquée dans l'une (56) desdites parois et qui débouche à l'extérieur latéralement au couvercle (14), tandis que les moyens élastiques (54) de rappel du verrou sont disposés entre ce verrou et l'autre paroi (58).

5. Appareil électroménager selon l'une quelconque des revendications précédentes, caractérisé en ce que le poussoir (40) est luimême rappelé vers sa position de retrait par des moyens élastiques (46).

6. Appareil électroménager selon les revendications 4 et 5, caractérisé en ce que le poussoir (40) présente un épaulement horizontal (72) qui est formé sur le bord inférieur de la lumière (70) et avec lequel peut venir en prise une portée horizontale (74) ménagée sur la partie active (68) du verrou et définissant la position d'armement du poussoir.

7. Appareil électroménager selon la revendication 6, caractérisé en ce que la partie active (68) du verrou présente une seconde portée horizontale (76) qui peut venir en prise avec l'épaulement (72) du poussoir et qui est décalée verticalement de la première (74) vers le haut et également horizontalement de celle-ci vers l'extérièur, cette seconde portée définissant la position de retrait du poussoir.

8. Appareil électroménager selon l'une quelconque des revendications précédentes, caractérisé en ce que, le groupe moteur (24) étant équipé d'un dispositif de freinage commandé également par la touche de manœuvre (34) et donc par le poussoir (40), la mise en service de ce dispositif de freinage s'effectue lors du retour du poussoir de sa position d'armement à sa position de retrait, tandis que, pour sa position d'armement, le poussoir maintient la touche (34) en une position pour laquelle ce dispositif de freinage est hors de service.

**Patentansprüche**

1. Elektrohaushaltsgerät zum Behandeln von Lebensmitteln, welches einen Sockel (10), der eine Arbeitsschüssel trägt, die durch einen abnehmbaren Deckel (14) verschlossen ist, der am Sockel durch eine Drehbefestigungsvorrichtung, z. B. vom Typ Bajonett-Vorrichtung befestigt ist, einen Antriebsmotor (24), der im Sockel angeordnet ist und dessen Abtriebswelle innerhalb der Arbeitschüssel ein Arbeitswerkzeug (30) trägt, einen Schalter (32), der den Motor betätigt und dessen Betätigungstaste (34) im Inneren eines in einer Fläche des Sockels ausgebildeten Sitzes angeordnet ist, und einen Druckknopf (40) zur Betätigung der Betätigungstaste, der am Deckel zwischen mindestens drei Stellungen beweglich gehalten ist, nämlich einer Ruhestellung, in der er sich außerhalb des Sitzes der Betätigungstaste befindet und die er vor der ersten Einschaltung des Motors nach jeder Befestigung des Deckels automatisch einnimmt, einer Spannstellung, in der er in den Einlaß des Sitzes eingreift und so die Drehung des Deckels verhindert, ohne jedoch den Antriebsmotor einzuschalten, und einer vorgeschobenen oder Arbeitsstellung, in der er tiefer in den Sitz eindringt und die Betätigungstaste betätigt, um den Antriebsmotor einzuschalten, aufweist, dadurch gekennzeichnet, daß es außerdem mit einem Sicherheitsriegel (52) ausgerüstet ist, der bezüglich des Druckknopfes zwischen einer Verriegelungsstellung (Fig. 2), in welche der Riegel durch eine elastische Vorrichtung (54) automatisch rückstellbar ist, sobald sich der Druckknopf (40) in seiner Spannstellung (Fig. 2) befindet und in der er die Rückkehr dieses Druckknopfes in seine Ruhestellung verhindert, und einer Entriegelungsstellung (Fig. 1) bewegbar ist, in welche dieser Riegel gegen die Wirkung der elastischen Vorrichtung gebracht werden kann und in der er die Rückkehr des Druckknopfes in seine Ruhestellung (Fig. 1) zuläßt.

2. Elektrohaushaltsgerät nach Anspruch 1, dadurch gekennzeichnet, daß der Riegel auf im Deckel (14) ausgebildeten Führungen (60) verschiebbar gehalten ist.

3. Elektrohaushaltsgerät nach Anspruch 2, dadurch gekennzeichnet, daß der Sitz (36) der Betätigungstaste (34) in einer waagerechten Fläche (38) des Sockels (10) ausgebildet ist, der Druckknopf (40) senkrecht verschiebbar in einem Durchlaß (42) gehalten ist, der den Deckel (14) in der Nähe seines Umfanges durchschneidet, und daß der Riegel (52) waagerecht verschiebbar gehalten ist.

4. Elektrohaushaltsgerät nach Anspruch 3, dadurch gekennzeichnet, daß der Riegel (52) quer in dem der Verschiebung des Druckknopfes (40) dienenden Durchlaß (42) zwischen zwei gegenüberliegenden Wänden (56 und 58) dieses Durchlasses angeordnet ist, und einen Arbeitsabschnitt (68) aufweist, der mit Spiel durch eine im Druckknopf (40) ausgebildete Öffnung (70) hindurchreicht, und einen freien Teil (62) aufweist, der durch eine Öffnung (64) hindurchreicht, welche in einer der beiden Wände (56) ausgebildet ist und seitlich außerhalb des Deckels (14) mündet, während die elastische Rückstellvorrichtung (54) des Riegels zwischen diesem und der anderen Wand (58) angeordnet ist.

5. Elektrohaushaltsgerät nach einem der vorangehenden Ansprüche, dadurch gekennzeichnet, daß der Druckknopf (40) selbst durch eine elastische Vorrichtung (46) in seine Ruhestellung rückstellbar ist.

6. Elektrohaushaltsgerät nach den Ansprüchen 4 und 5, dadurch gekennzeichnet, daß der Druckknopf (40) eine waagerechte Schulter (72) aufweist, die an der Unterkante der Öffnung (70) ausgebildet ist und mit der ein waagerechter Anschlag (74) in Eingriff kommen kann, der am Arbeitsabschnitt (68) des Riegels ausgebildet ist und die Spannstellung des Druckknopfes definiert.

7. Elektrohaushaltsgerät nach Anspruch 6, dadurch gekennzeichnet, daß der Arbeitsabschnitt (68) des Riegels einen zweiten waagerechten Anschlag (76) aufweist, welcher mit der Schulter (72) des Druckknopfes in Eingriff kommen kann und gegenüber dem ersten Anschlag (74) nach oben und waagerecht von diesem nach außen versetzt ist und die Ruhestellung des Druckknopfes definiert.

8. Elektrohaushaltsgerät nach einem der vorangehenden Ansprüche, dadurch gekennzeichnet, daß der Antriebsmotor (24) mit einer Bremsvorrichtung ausgerüstet ist, die ebenfalls durch die Betätigungstaste (34) und daher durch den Druckknopf (40) betätigbar ist, wobei die Einschaltung dieser Bremsvorrichtung bei der Rückkehr des Druckknopfes aus seiner Spannstellung in seine Ruhestellung erfolgt, während der Druckknopf in seiner Spannstellung die Betätigungstaste (34) in einer Stellung hält, in der diese Bremsvorrichtung ausgeschaltet ist.

**Claims**

1. A domestic electrical appliance for food processing wihch comprises a base (10) supporting a work bowl closed by a removable cover (14) which is fixed to said base by a rotary fixing device, for example of te bayonet type, a motor unit (24) which is disposed in the base and having an output shaft connected to a working tool (30) positioned within the bowl, and switch means (32) for operating said motor unit having a movable operating contact (34) received in a housing formed in said base, and a push button (40) for actuating said movable contact mounted on said cover, said push botton being movable so as to occupy first, second and third positions, wherein in its first, retracted position, which the push button automatically occupies before the first actuating of the motor and after each fixing of the cover, the push button is out of engagement with the housing of the movable contact, in its second, cocked position, the push button is engaged in the entrance to the housing so as to prevent rotation of the cover relative to the base without actuating the switch means to operate the motor unit, and in its third, extended position, the push button extends further into said housing so as to actuate the switch means to operate the motor unit, characterized in that it further comprises a safety lock (52) mounted for movement relative to the push button, the safety lock being movable between a locked position (Fig. 2) towards which this safety lock is automatically retracted by elastic means (54), as soon as said push button (40) is in its second, cocked position (Fig. 2), and in which it prevents the push button to return to its first retracted position, and an unlocked position (Fig. 1) towards which this safety lock can be moved against the biassing by said elastic means, and in which it allows the push button to return to its first, retracted position (Fig. 1).

2. A domestic electrical appliances as claimed in Claim 1, characterized in that said safety lock is mounted slidable on guides (60) provided in the cover (14).

3. A domestic electrical appliance as claimed in Claim 2, characterized in that the housing (36) of said movable contact (34) is provided in a horizontal face (38) of the base (10) and said push button (40) being mounted to slide vertically in a passage (42) traversing the cover (14) near its periphery, and the safety lock (52) being mounted to slide horizontally.

4. A domestic electrical appliance as claimed in Claim 3, characterized in that said safety lock (52) is disposed transversely in the passage (42) between two opposite walls (56 + 58) of this passage, in which the push button (40) is displac- able, said lock comprising a working part (68) which extends with clearance through a port (70) provided in the push button (40), and a free part (62) which extends through an aperture (64) provided in the wall (56) of said walls (56 and 58) and projects laterally outwardly of the cover (14), said elastic means (54) for biassing the safety lock being disposed between said safety lock and the other wall (58).

5. A domestic electrical appliance as claimed in any preceeding Claim, characterized in that elastic means (45) are provided for elastically biassing said push button (40) towards its retracted position.

6. A domestic electrical appliance as claimed in Claim 4 and 5, characterized in that the push button (40) has a horizontal shoulder (72) formed on the bottom edge of the port (70), and engaging a horizontal bearing surface (74) provided on the working part (68) of the lock and defining the cocked position of the push button.

7. A domestic electrical appliance as claimed in Claim 6, characterized in that the working part (68) of the safety lock includes a second horizontal bearing surface (76) which can engage the shoulder (72) of the push button, said surface being offset vertically upwardly from the first bearing surface (74) and being also offset horizontally outwardly from said surface (74), this second surface (76) defining the retracted position of the push button.

8. A domestic electrical appliance as claimed in any preceeding Claim, characterized in that said motor unit (24) is equipped with braking means controlled by the movable operating contact (34) and thus by said push button (40), said braking means being arranged to be operated upon return of the push button from its cocked position to its retracted position, and said braking means being arranged to be inoperative when the push button is in its cocked position in which it maintains the switch contact (34) in a midway position in which the braking means is inoperative.

Fig 1

0 004 908

Fig 2

Fig 3

Fig 4

9